(19) Europäisches Patentamt
European Patent Office
Office européen des brevets

(11) Veröffentlichungsnummer: **0 205 079 B1**

(12) # EUROPÄISCHE PATENTSCHRIFT

(45) Veröffentlichungstag der Patentschrift: **22.01.92**

(51) Int. Cl.$^5$: **C09B 19/02**

(21) Anmeldenummer: **86107527.3**

(22) Anmeldetag: **03.06.86**

Die Akte enthält technische Angaben, die nach dem Eingang der Anmeldung eingereicht wurden und die nicht in dieser Patentschrift enthalten sind.

(54) **Saure Triphendioxazin-disulfimid-Farbstoffe.**

(30) Priorität: **14.06.85 DE 3521389**

(43) Veröffentlichungstag der Anmeldung:
**17.12.86 Patentblatt 86/51**

(45) Bekanntmachung des Hinweises auf die Patenterteilung:
**22.01.92 Patentblatt 92/04**

(84) Benannte Vertragsstaaten:
**CH DE GB LI**

(56) Entgegenhaltungen:
**EP-A- 0 144 580**
**EP-A- 0 199 056**
**JP-A- 6 096 657**

(73) Patentinhaber: **BAYER AG**
**W-5090 Leverkusen 1 Bayerwerk(DE)**

(72) Erfinder: **Harms, Wolfgang, Dr.**
**Walter-Flex-Strasse 21**
**W-5090 Leverkusen 1(DE)**
Erfinder: **Wunderlich, Klaus, Dr.**
**Carl-Rumpff-Strasse 21**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der Erfindung sind Farbstoffe der Formel

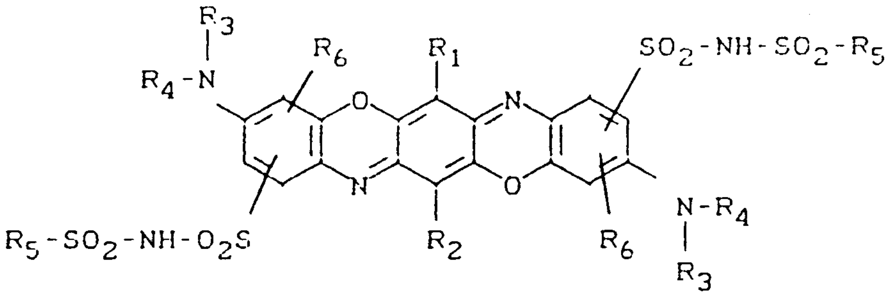

(I)

worin

$R_1$, $R_2$ = Wasserstoff, Chlor, Br, $C_1$-$C_4$-Alkyl, $C_1$-$C_4$-Alkoxy, Aryl, Aryloxy, Acylamino, gegebenenfalls substituiertes Carbonamid

$R^3$ = Wasserstoff, $C_1$-$C_4$-Alkyl, welches jeweils gegebenenfalls substituiert ist durch -OH, -O-($C_1$-$C_2$-Alkyl), $-OSO_3H$, $-SO_3H$, $OPO_3H_2$

$R^4$ = Wasserstoff, $C_1$-$C_8$-Alkyl, welches jeweils gegebenenfalls durch Hydroxy, Methoxy, Ethoxy, Ethoxycarbonyl, Cyano, Sulfato oder Sulfo substituiert ist, Cycloalkyl, Aralkyl oder Aryl, wobei die Alkylreste $R_3$ und $R_4$ zusammen mit dem H-Atom auch die restlichen Glieder eines 6-Rings bilden können,

$R_5$ = Alkyl oder Aryl

$R_6$ = H, Alkyl, Alkoxy, Halogen.

Das prioritätsältere, nicht vorveröffentliche Dokument EP-A 0 144 580 beschreibt disulfonamidsubstituierte Triphendioxazinfarbstoffe, die weiterhin durch zwei, jeweils über einen Aminosubstituenten gebundene, Reaktivreste substituiert sein können.

Das Dokument JP-A 60 96657 ist das vorveröffentlichte japanische Äquivalent zu oben genannten EP-A 0 144 580.

Die Alkyl-, Alkoxy-, Cycloalkyl-, Aralkyl- oder Arylreste können gegebenenfalls übliche Substituenten aufweisen.

Geeignete Reste $R_1$, $R_2$ sind außer Wasserstoff insbes. Cl, Br, $C_1$-$C_4$-Alkyl, $C_1$-$C_4$-Alkoxy, Aryl, Aryloxy, insbesondere gegebenenfalls substituiertes Phenyl und Phenoxy, Acylamino wie $C_1$-$C_4$-Alkylcarbonylamino, insbesondere Acetylamino und/oder gegebenenfalls substituiertes Phenylcarbonylamino wie Benzoylamino, gegebenenfalls substituiertes Carbonamid wie $CONH_2$, N-Monoalkyl- und N,N-Dialkylcarbonamid.

Geeignete Reste $R_3$ sind außer Wasserstoff insbesondere Methyl, Ethyl, 1- und 2-Propyl, 1- und 2-Butyl, 2-Methyl-1-propyl, gegebenenfalls substituiert durch -OH, -O-($C_1$-$C_2$-Alkyl), $-OSO_3H$, $-SO_3H$, $OPO_3H_2$.

Geeignete Reste $R_4$ sind außer Wasserstoff insbesondere Alkylreste wie Methyl, Ethyl, 1- und 2-Propyl, 1- und 2-Butyl, 2-Methyl-1-propyl, 1-Pentyl, 3-Methyl-1-butyl, 2-Methyl-1-butyl, 2-Pentyl, 3-Pentyl, 1-Hexyl, 2-Ethylhexyl, 2-Hydroxyethyl, 2-Methoxyethyl, 2-Ethoxyethyl, 3-Methoxy-1-propyl, 3-Ethoxy-1-propyl, 3-Methoxy-1-butyl, 2-Ethoxycarbonylethyl, 2-Cyanethyl, 2-Sulfatoethyl, 2-Sulfoethyl, 3-Hydroxy-1-propyl, 3-Hydroxy-1-butyl.

Cycloalkylreste wie Cyclohexyl, 4-, 3-, 2-Methylcyclohexyl, 2,4-Dimethylcyclohexyl, 2-Benzylcyclohexyl, 4-Phenylcycionexyl, Cyclopentyl:

Aralkylreste wie Benzyl, 2-Phenylethyl, 4-Phenyl-2-butyl, 1-Phenyl-2-propyl, 5-Methyl-1-phenyl-2-hexyl, 2-(4-Tolyl)-ethyl:

Arylreste wie Phenyl, $C_1$-$C_4$-Alkylphenyl, Chlorphenyl, Acylaminophenyl wie Acetylaminophenyl, Propionylaminophenyl, Benzoylaminophenyl, Ureidophenyl.

$R_3$ und $R_4$ können in der Gruppierung

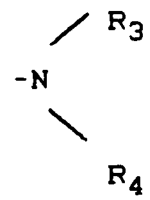

auch zu einem Ringsystem wie

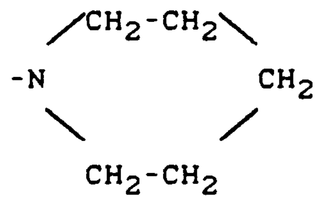 , 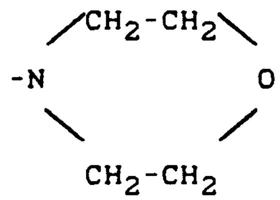 , 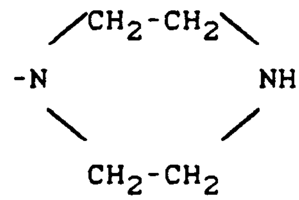

verknüpft sein.

Geeignete Reste $R_5$ sind beispielsweise $C_1$-$C_4$-Alkylreste wie Methyl, Ethyl, Propyl, Butyl, 2-Chlorethyl, 4-Chlorbutyl, ferner Arylreste wie Phenyl oder substituiertes Phenyl wie Methylphenyl, Chlorphenyl, Acetylaminophenyl, $C_1$-$C_2$-Alkoxyphenyl, $C_1$-$C_2$-Alkoxycarbonylphenyl, Nitrophenyl sowie 1- oder 2-Naphthyl.

Vorzugsweise stehen $R_1$ und $R_2$ für Cl, $R_3$ und $R_6$ für H.

Bevorzugte Farbstoffe sind demnach solche der Formel

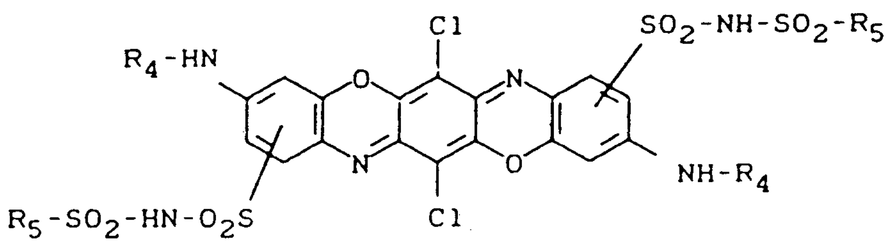

(II)

worin
$R_4$ und $R_5$ die oben angegebene Bedeutung haben,
weiterhin solche der Formel

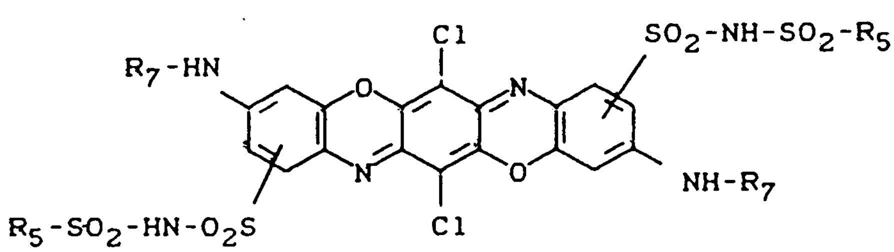

(III)

worin

| | |
|---|---|
| $R_7$ = | Wasserstoff, $C_1$-$C_8$-Alkyl, welches jeweils gegebenenfalls durch Hydroxy, Methoxy, Ethoxy, Ethoxycarbonyl, Cyano, Sulfato oder Sulfo substituiert ist oder Cyclohexyl, und |
| $R_5$ | die oben angegebene Bedeutung hat, |

ferner solche der Formel

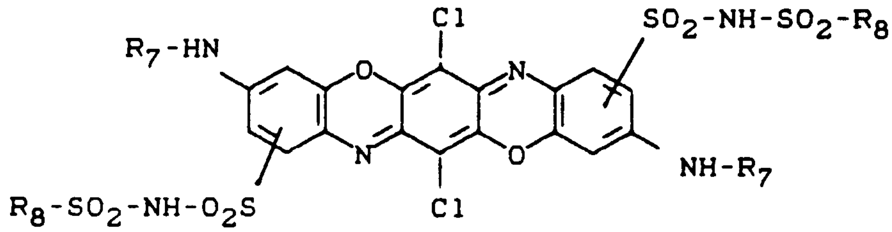

(IV)

worin

$R_8$ = $CH_3$,

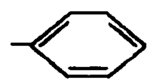

und $R_7$ die oben angegebene Bedeutung hat.

Die Disulfimide der Formel (1) können hergestellt werden nach an sich bekannten Methoden durch Kondensation von 1,4-Benzochinonen der Formel

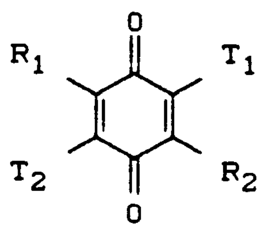

(V)

worin

$T_1$, $T_2$, Wasserstoff, Cl, Br, O-Alkyl oder O-Aryl bedeuten mit Aminobenzoldisulfimiden der Formel

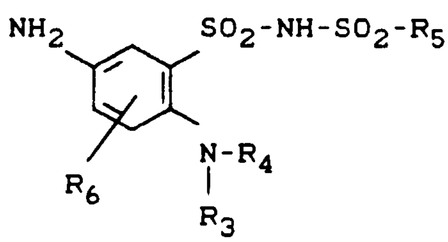

(VI)

zu Anilverbindungen der Formel

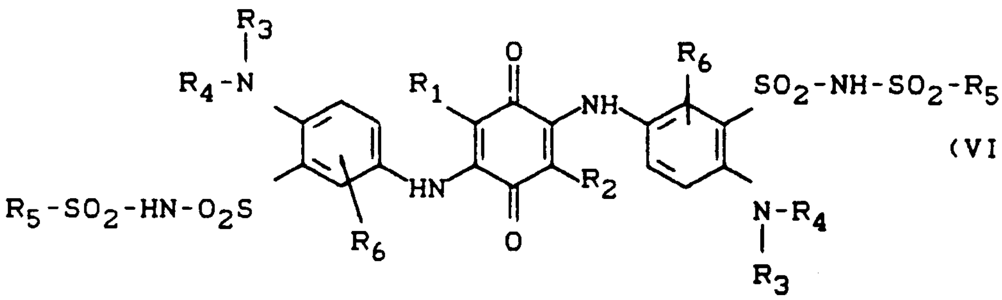

(VII)

und Ringschluß der Anilverbindungen zu den Dioxazinen vorteilhaft in hochprozentiger Schwefelsäure oder Oleum unter Zusatz von Oxydationsmitteln.

Je nach den beim Ringschluß angewandten Reaktionsbedingungen kann die Disulfimidgruppe $SO_2$-NH-$SO_2$-$R_5$ bei den Verbindungen der Formel (I) in den Benzringen des Dioxazinsystems entweder in den o- oder p-Stellungen zu den Ringsauerstoffatomen des Dioxazinsystems auftreten.

Aminobenzoldisulfimide der Formel (VI) werden zum Beispiel hergestellt aus Nitrobenzoldisulfimiden der Formel

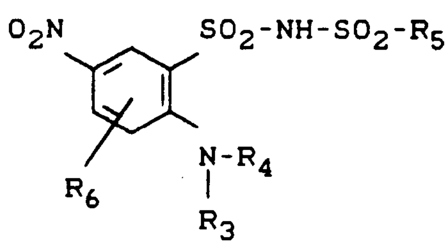

(VIII)

durch Reduktion mit katalytischem Wasserstoff oder mit Metallen und Säuren wie beispielsweise Eisen oder Zink in Gegenwart von Essigsäure oder Salzsäure oder mit anderen zur Reduktion aromatischer Nitroverbindungen geeigneten Reagenzien.

Verbindungen der Formel (VIII) können beispielsweise hergestellt werden durch Kondensation von 2-Halogen-5-nitrobenzoldisulfimiden der Formel

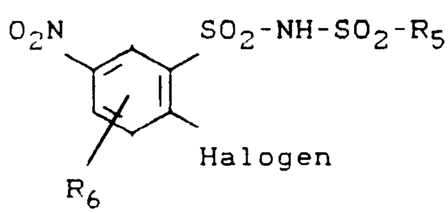

(IX)

mit Aminoverbindungen der Formel

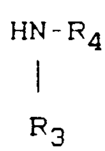

(X)

2-Halogen-5-nitrobenzoldisulfimide der Formel (IX) werden erhalten durch Umsetzung von 2-Chlor-5-nitrobenzolsulfamiden der Formel

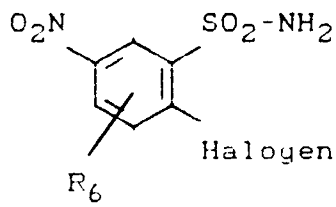

(XI)

mit Sulfochloriden der Formel

$R_5$-$SO_2Cl$ (XII)

oder durch Kondensation von 2-Halogen-5-nitrobenzolsulfochloriden der Formel

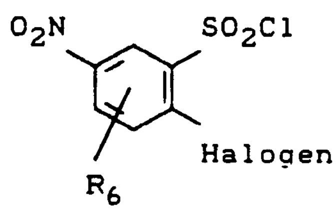

(XIII)

mit Sulfonamiden der Formel

$R_5$-$SO_2$-$NH_2$ (XIV)

Eine weitere Synthesemöglichkeit zur Herstellung von Verbindungen der Formel (I) besteht in der Umsetzung von 2-Halogen-5-nitrobenzolsulfamiden der Formel (XI) mit Aminen der Formel (X) zu 2-(subst.)-Amino-5-nitrobenzolsulfamiden der Formel

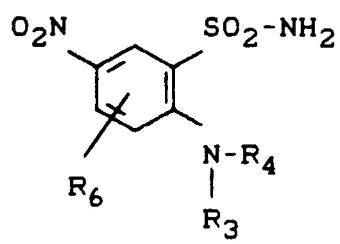

(XV)

Reduktion der Nitroverbindungen (XV) zu Aminoverbindungen der Formel

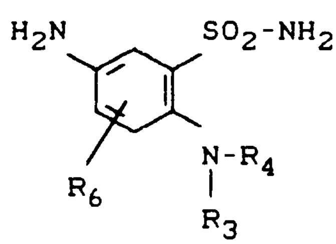

(XVI)

Kondensation von Verbindungen der Formel (XVI) mit 1,4-Benzochinonen der Formel (V) zu Dianiliden der Formel

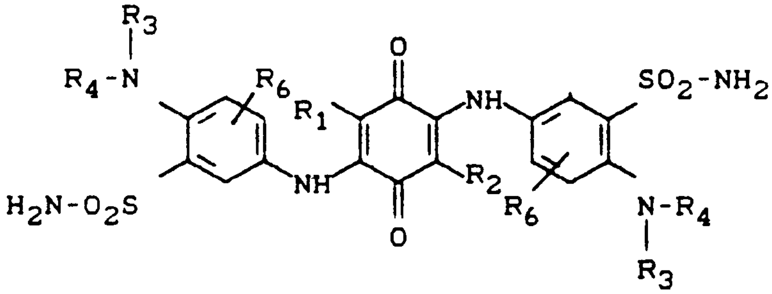

(XVII)

Ringschluß der Dianilide der Formel (XVII) zu Triphendioxazin-sulfamiden der Formel

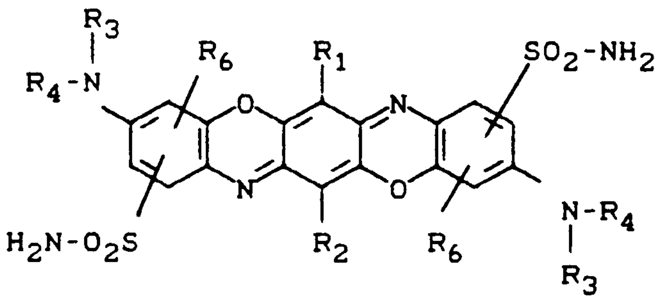

(XVIII)

und Umsetzung der Triphendioxazinsulfamide der Formel (XVIII) mit Sulfochloriden der Formel (XII).

Die erfindungsgemäßen Farbstoffe sind wasserlösliche Farbstoffe, die in Form der freien Disulfimide oder ihrer Lithium-, Natrium-, Kalium- oder Ammoniumsalze isoliert und angewandt werden können.

Die neuen Farbstoffe sind wertvolle Produkte, die sich durch hohe Farbstärken bzw. Ergiebigkeiten auszeichnen.

Die Erfindung betrifft weiterhin die Verwendung von Farbstoffen der Formel (I) in welcher

$R^1$, $R^2$ = Wasserstoff, Chlor, Br, $C_1$-$C_4$-Alkyl, $C_1$-$C_4$-Alkoxy, Aryl, Aryloxy, Acylamino, gegebenenfalls substituiertes Carbonamid

$R_3$ = H, Alkyl

$R_4$ = H, Alkyl, Cycloalkyl, Aralkyl oder Aryl bedeutet,

wobei

die Alkylreste $R_3$ und $R_4$ zusammen mit dem N-Atom auch die restlichen Glieder eines 6-Rings bilden können; sowie

$R_5$ = Alkyl oder Aryl

$R_6$ = H, Alkyl, Alkoxy, Halogen ist

zum Färben von Cellulosematerialien oder von natürlichen oder synthetischen Polyamiden.

Sie können in wässrige Lösung zum Färben von Cellulosematerialien wie Baumwolle, Viskoserayon oder Papier eingesetzt werden. Als saure Farbstoffe sind sie vor allem geeignet zum Färben und Bedrucken von natürlichen und synthetischen Polyamiden wie Wolle, Seide, Perlon, Nylon 66. Auf diesen Materialien werden nach den für saure Farbstoffe üblichen Färbe-, Klotz- und Druckverfahren sehr farbstarke, klare, blaue Färbungen erhalten, die sich durch sehr gute Echtheitseigenschaften auszeichnen. Gegenüber den bisher bekannten sulfonsäuregruppenhaltigen sauren Triphendioxazin-Farbstoffen zeigen die erfindungsgemäßen Farbstoffe verbessertes färberisches Verhalten.

In den nachfolgenden Beispielen handelt es sich bei Temperaturangaben um °C. Die Formeln der wasserlöslichen Farbstoffe sind die der freien Disulfimide.

Die in den Beispielen angegebenen Farbkennzahlen beziehen sich auf Color Index Hue Indication Chart (Indicator Numbers).

Beispiel 1

10,0 g eines Produktes der Formel

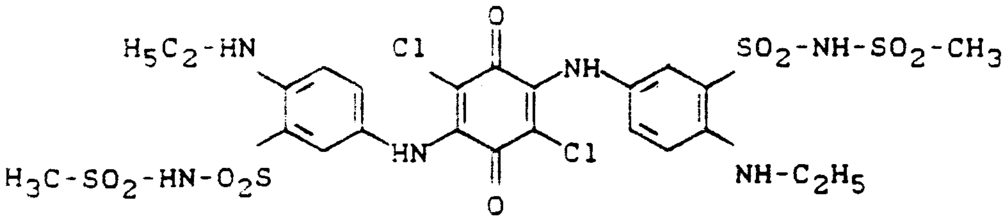

erhalten durch Kondensation von Chloranil mit 5-Amino-2-ethylamino-N-(methylsulfonyl)-benzolsulfonamid, werden innerhalb von 30-45 Minuten bei 0-5° C in 48 g 90 %iger. Schwefelsäure eingetragen. Wenn nach kurzem Nachrühren alles gelöst ist, trägt man 2,6 g Braunstein mit einem Gehalt von 2,3 a $MnO_2$ in 45 Minuten bei 0-5° gleichmäßig ein, wobei eine Farbänderung von braunoliv nach blau eintritt. Man rührt 1 1/2 Stunden nach, gibt das Reaktionsgemisch auf 400 g Eis, saugt den ausgefallenen Farbstoff ab und wäscht ihn mit 10 %iger Natriumchloridlösung.

Der Farbstoff wird in 400 ml Wasser unter Zugabe von verdünnter Natronlauge bei pH 9 gelöst, die Lösung unter Zusatz von 0,2 g Aktivkohle geklärt und aus dem Filtrat der Farbstoff bei 60° durch Zusatz von Natriumchlorid in Nadeln abgeschieden. Man saugt ihn ab, wäscht ihn mit 10 %iger Natriumchloridlösung und trocknet ihn.

Er entspricht der Formel

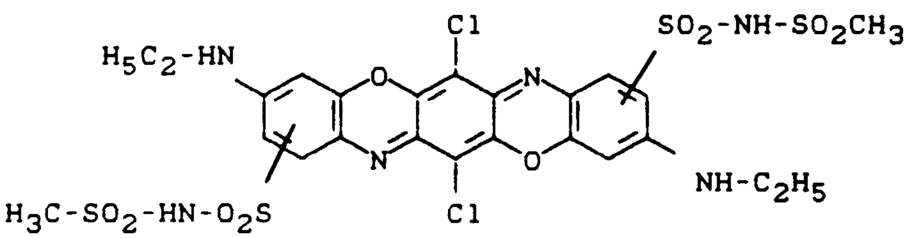

und färbt Perlon aus schwach saurem Bade in klaren Blautönen, die gute Lichtechtheit und ausgezeichnete Naßechtheiten aufweisen. Weiter hervorstechendes Merkmal des Farbstoffs ist seine hohe Ergiebigkeit. C.I. Indicator Number 14.

$\lambda max$ = 621 nm in Wasser.

Das eingangs eingesetzte Chloranilkondensationsprodukt stellt man auf folgende Weise her:

100 g 2-Chlor-5-nitrobenzolsulfamid werden in 1400 ml Wasser suspendiert. Nach Zusatz von 90 ml 4n Natronlauge bis zum pH 11 läßt man bei 20° 59 g Methansulfochlorid in einer Stunde zutropfen und hält den pH-Wert mit 2 n Natronlauge auf 10,5-11,0. Wenn die Reaktion nach einigen Stunden beendet ist, stellt man den pH-Wert auf 8,5 und engt die erhaltene Lösung im Rotationsverdampfer auf etwa 400 ml ein.

Die Lösung wird mit 130 ml 50 %igem Ethylamin versetzt und anschließend 4 Stunden auf 80° erwärmt. Nach beendeter Umsetzung zum 2-Ethylamino-5-nitro-N-(methylsulfonyl)-benzolsulfonamid wird die erhaltene gelbe Lösung mit konzentrierter Salzsäure auf pH 2 gestellt, mit Natriumchlorid versetzt, die Fällung bei 0-5° abgesaugt und der Filterkuchen mit 25 %iger Natriumchloridlösung gewaschen. Das erhaltene getrocknete Produkt enthält ca. 22 % Natriumchlorid.

128 g des erhaltenen Produktes entsprechend 100 g salzfreiem 2-Ethylamino-5-nitro-N-(methylsulfonyl)-benzolsulfonamid werden in 400 ml Wasser bei pH 8,5 gelöst. Man setzt 3 g Raney-Nickel hinzu und reduziert in einem Autoklaven unter einem Wasserstoffdruck von 50-70 bar bei einer Temperatur von 50°. Nach beendeter Reduktion wird die erhaltene Lösung von 5-Amino-2-ethylamino-N-(methylsulfonyl)-benzolsulfonamid von Nickel geklärt.

Das Filtrat wird auf pH 6 gestellt, mit 34,3 g 2,3,5,6-Tetrachlorchinon und 20 ml Aceton versetzt und auf 45° geheizt. Man hält während der einsetzenden Kondensation den pH-Wert mit 2 n Sodalösung ständig auf 5,5-6,0 und rührt bis zur beendeten Umsetzung unter den gleichen Bedingungen weiter. Die braune Fällung des Chloranilkondensationsproduktes wird bei 20° abgesaugt, mit angesäuertem Wasser gewaschen und bei 50° im Umluftschrank getrocknet.

Beispiel 2

10,0 g eines Produktes der Formel

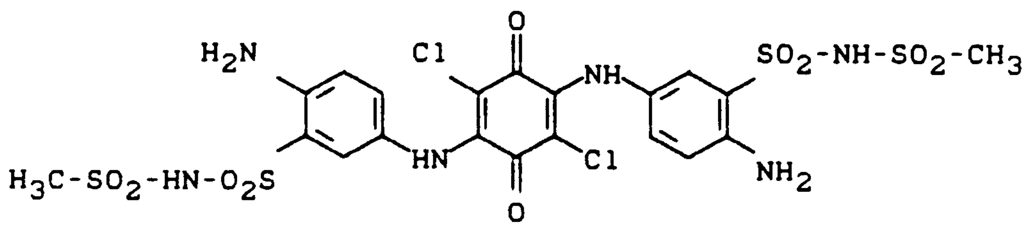

werden bei -5° bis 0° in 28 ml 20 %iges Oleum in 2 Stunden eingetragen. Wenn alles gelöst ist, erwärmt man auf +10° und trägt nun 7,7 g Kaliumperoxodisulfat innerhalb 45 Minuten ein, Dabei wird die Temperatur durch Kühlung zwischen 15 und 20° gehalten. Etwa 15-30 Minuten nach dem Eintragen des Oxydationsmittels ist die Umsetzung beendet. Man gibt das Reaktionsgemisch auf 300 g Eis, gibt zu der Suspension 300 ml 25 %ige Natriumchloridlösung und saugt die Fällung ab. Der Filterkuchen wird mit 10 %iger Natriumchloridlösung gewaschen.

Er wird in 300 ml Wasser suspendiert. Man stellt den pH-Wert mit verdünnter Natronlauge auf 8,0, bringt durch Erwärmen bei diesem pH-Wert alles in Lösung und salzt mit Natriumchlorid den Farbstoff in schönen Kristallen aus. Er wird durch Absaugen bei 20° und Waschen mit 10 %iger Natriumchloridlösung isoliert.

Er entspricht der Formel

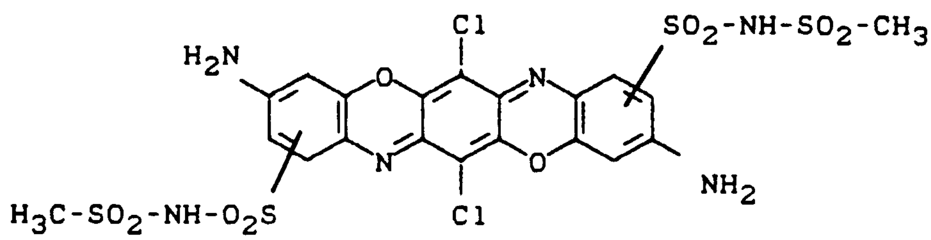

und gibt auf synthetischen und natürlichen Polyamidfasern wie Perlon, Nylon 66 und Wolle etwas rotstichig blaue; kräftige Färbungen mit guter Lichtechtheit und sehr guten Naßechtheiten. C.I. Indicator Number 13.
$\lambda max$ = 596 nm in Wasser

Zur Herstellung des eingangs in Beispiel 2 beschriebenen Chloranilkondensationsproduktes geht man analog zur Verfahrensweise im Beispiel 1 vor.

Die aus 100 g 2-Chlor-5-nitrobenzolsulfamid und 59 g Methansulfochlorid erhaltene Disulfimidlösung wird im Rotationsverdampfer eingedampft, der Rückstand in 1 l konzentriertem Ammoniak gelöst und die Lösung 6 Stunden im Autoklaven auf 90° erhitzt, bis der Austausch des 2-ständigen Chloratoms gegen die Aminogruppe vollständig ist. Anschließend wird der Ansatz auf 500 ml eingeengt und die Lösung mit 150 g Kaliumchlorid versetzt. Man rührt bei 20° nach, saugt die Ausfällung ab und deckt den Filterkuchen dreimal mit 25 %iger Kaliumchloridlösung ab. Das Produkt enthält nach Trocknen etwa 34 % Kaliumchlorid.

113,6 g des erhaltenen Produktes entsprechend 75,0 g salzfreiem 2-Amino-5-nitro-N-(methylsulfonyl)-benzolsulfonamid werden in 800 ml Wasser bei pH 8-9 suspendiert. Nach Zusatz von 2 g Raney-Nickel drückt man in einem Autoklaven 70 bar Wasserstoff auf und heizt den Ansatz auf 50°. Nach beendeter Reduktion wird die erhaltene Lösung des 2,5-Diamino-N-(methylsulfonyl)-benzolsulfonamids durch Klärung von Nickel befreit und mit 28,1 g 2,3,5,6-Tetrachlorchinon analog den Angaben des Beispiels 1 kondensiert. Es fallen gut ausgebildete braune rechteckige Kristalle des Kondensationsproduktes aus, die abgesaugt und mit Aceton gewaschen werden.

<u>Beispiel 3</u>

10,0 g eines Produktes der Formel

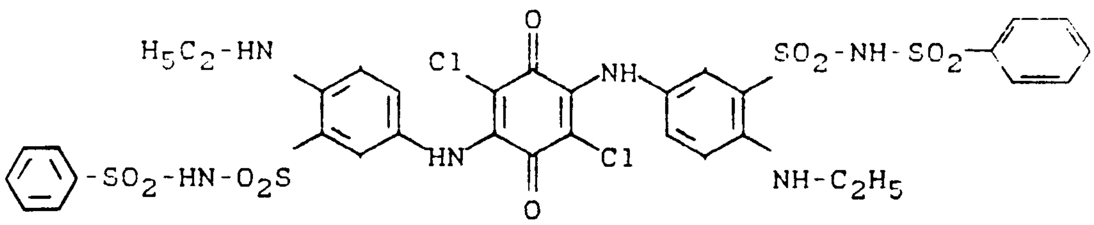

erhalten durch Kondensation von Chloranil mit 5-Amino-2-ethylamino-N-(phenylsulfonyl)-benzolsulfonamid werden innnerhalb 45 Minuten bei 0-5° in 50 g 90 %ige Schwefelsäure eingetragen. Nach völliger Lösung trägt man 2,2 g Braunstein mit einem Gehalt von 1,95 g $MnO_2$ in 45 Minuten bei 0-5° gleichmäßig ein, rührt 2 Stunden nach und trägt das Reaktionsgemisch in 400 g Eis ein. Der ausgefallene Farbstoff wird abgesaugt, mit 10 %iger Natriumchloridlösung gewaschen, anschließend in 500 ml Wasser gelöst unter Einstellen eines pH-Wertes von 9 mittels verdünnter Natronlauge und sodann durch Aussalzen erneut isoliert. Nach Absaugen, Waschen und Trocknen erhält man ein Produkt der Formel

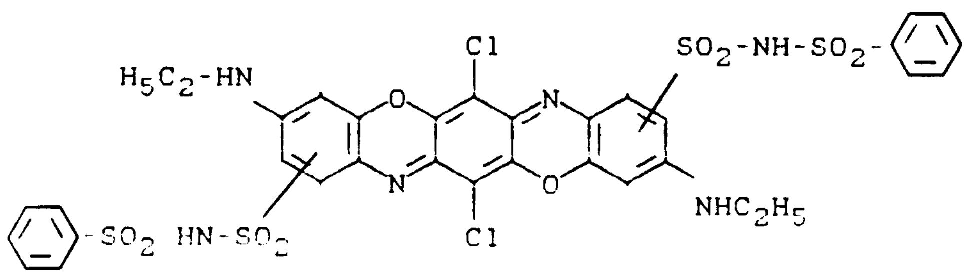

das Perlon in klaren Blautönen mit ausgezeichneten Echtheiten färbt.

Das eingangs im Beispiel eingesetzte Dianilid wird in folgender Weise hergestellt:

53,3 g gemahlenes Benzolsulfamid werden in 600 ml Wasser suspendiert. Man stellt die Suspension durch Zugabe einiger ml 50 %igerNatronlauge auf pH 11 und trägt dann 83,5 g 2-Chlor-5-nitrobenzolsulfochlorid in 15 Minuten gleichmäßig ein. Gleichzeitig hält man den pH-Wert mit 4 n Natronlauge auf 10,5-11,0 und läßt die Temperatur nicht über 30° ansteigen. Ist die Umsetzung nach einigen Stunden beendet, stellt man den pH-Wert auf 10,5 ein, rührt einige Zeit nach, saugt die Fällung ab und wäscht den Filterkuchen mit 25 %iger Natriumchloridlösung. Man erhält ein 2-Chlor-5-nitro-N-(phenylsulfonyl)-benzolsulfonamid, das nach Trocknen 4 % Natriumchlorid enthält.

100 g 2-Chlor-5-nitro-N-(phenylsulfonyl)-benzolsulfonamid werden in 100 ml 50 %igem Ethylamin und 100 ml Wasser einige Stunden auf 70° erhitzt, bis der Austausch des Chloratoms gegen den Ethylaminorest vollständig ist. Nach Verdünnen der braunen Lösung mit 1 l Wasser wird das Reaktionsprodukt mit 100 g Natriumchlorid ausgesalzen, abgesaugt und mit 25 % und 10 %iger Natriumchloridlösung gewaschen. Man erhält nach Trocknen ein 2-Ethylamino-5-nitro-N-(phenylsulfonyl)-benzolsulfonamid mit etwa 7 % Natriumchlorid.

90 g des erhaltenen Produktes entsprechend 83,7 g salzfreiem 2-Ethylamino-5-nitro-N-(phenylsulfonyl)-benzolsulfonamid werden in 700 ml Wasser suspendiert. Man gibt 3 g Raney-Nickel hinzu und drückt in einem Autoklaven 80 bar Wasserstoff auf. Wenn die Wasserstoffaufnahme nachläßt, steigert man die Temperatur auf 50° und läßt ausreagieren. Man klärt die fast farblose Lösung vom Nickel und setzt das erhaltene Filtrat unter Stickstoffatmosphäre.

Zu der Lösung werden 24,1 g 2,3,5,6-Tetrachlorchinon und 25 ml Aceton gegeben. Man erwärmt das Reaktionsgemisch auf 50° und stumpft die frei werdende Salzsäure mit 2n Sodalösung ständig so ab, daß im Reaktionsgemisch konstant ein pH-Wert von 5,5-6,0 gehalten wird. Das ausgefallene braune Dianilid wird bei 20° abgesaugt und mit Wasser und Ethanol gewaschen.

Analoge blaue Triphendioxazindisulfimid-Farbstoffe der Formel

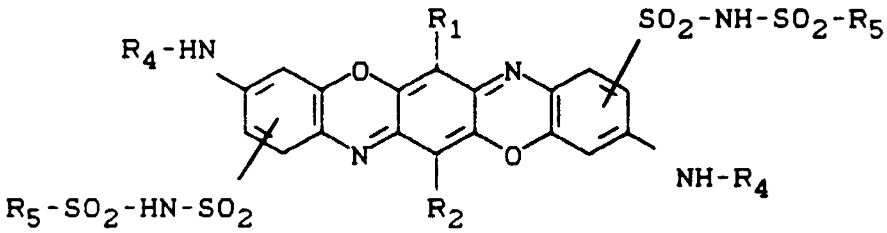

die zum naßechten Färben von natürlichen und synthetischen Polyamidfasern geeignet sind, erhält man durch Einführung der in Tabelle I angegebenen Reste in analoger Weise, wie in den vorangegangenen Beispielen beschrieben.

Tabelle I

| Nr. | $R_1$ | $R_2$ | $R_4$ | $R_5$ |
|---|---|---|---|---|
| 3 | -Cl | -Cl | -H | 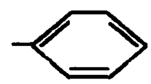 |
| 4 | " | " | $-C_2H_5$ | $-n-C_4H_9$ |
| 5 | " | " | $-CH_3$ | $-CH_3$ |
| 6 | " | " | $-C_2H_5$ | $-C_2H_5$ |
| 7 | " | " | -H | $-n-C_3H_7$ |
| 8 | " | " | $-CH_3$ | 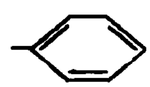 |

Tabelle I (Fortsetzung)

| Nr. | $R_1$ | $R_2$ | $R_4$ | $R_5$ |
|---|---|---|---|---|
| 9 | -Cl | -Cl | $-i-C_8H_{17}$ | $-CH_3$ |
| 10 | " | " | -H | $-n-C_4H_9$ |
| 11 | " | " | $-C_2H_5$ | $-n-C_3H_7$ |
| 12 | " | " | $-CH_2-CH(CH_3)_2$ | $-CH_3$ |
| 13 | " | " | 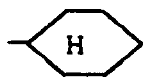 | $-CH_3$ |
| 14 | " | " | 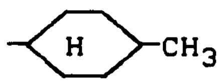 | $-n-C_4H_9$ |
| 15 | " | " | 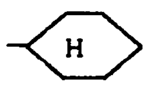 | 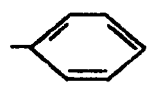 |
| 16 | " | " | $-CH_2-CH_2$ 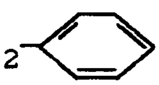 | $-CH_3$ |
| 17 | " | " | $-(CH_2)_5-CH_3$ | $-CH_3$ |
| 18 | " | " | $-CH_2$ 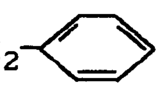 | $-C_2H_5$ |
| 19 | " | " | $-CH_2-CH_2-OH$ | $-CH_3$ |
| 20 | " | " | $-CH_2-CH_2-OSO_3H$ | 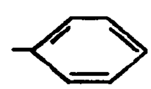 |

Tabelle I (Fortsetzung)

| Nr. | $R_1$ | $R_2$ | $R_4$ | $R_5$ |
|---|---|---|---|---|
| 21 | -Cl | -Cl | $-CH_2-CH_2-OSO_3H$ | $-CH_3$ |
| 22 | " | " | $-CH_2-CH_2-CH_2-OCH_3$ | $-CH_3$ |
| 23 | " | " | $-CH_2-CH_2-OCH_3$ | $-C_2H_5$ |
| 24 | " | " | $-CH_2-CH_2-SO_3H$ | 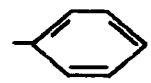 |
| 25 | " | " | $-CH_2-CH_2-CH_2-OH$ | 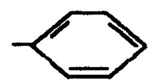 |
| 26 | " | " | 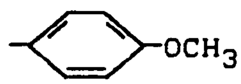 | $-CH_3$ |
| 27 | " | " | 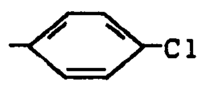 | $-CH_3$ |
| 28 | " | " | 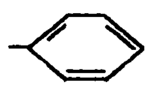 | $-CH_3$ |
| 29 | " | " | 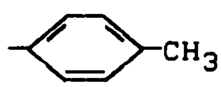 | $-C_2H_5$ |
| 30 | " | $-CH_3$ | $-C_2H_5$ | 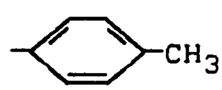 |
| 31 | -Br | -Br | $-n-C_4H_9$ | 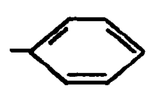 |

Tabelle I (Fortsetzung)

| Nr. | $R_1$ | $R_2$ | $R_4$ | $R_5$ |
|---|---|---|---|---|
| 32 | " | " | 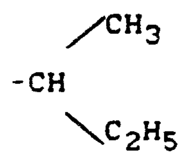 | $-C_2H_5$ |
| 33 | " | " | $-CH(CH_3)_2$ | $-C_2H_5$ |
| 34 | " | " | 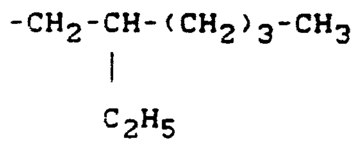 | $-CH_3$ |
| 35 | " | " | 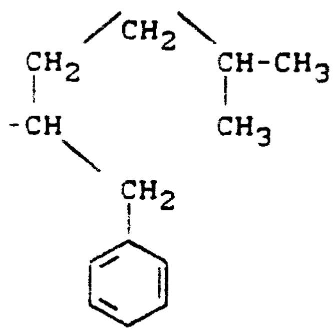 | $-CH_3$ |
| 36 | " | " | 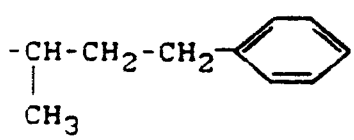 | $-CH_3$ |

Tabelle I (Fortsetzung)

| Nr. | $R_1$ | $R_2$ | $R_4$ | $R_5$ |
| --- | --- | --- | --- | --- |
| 37 | -Cl | -Cl | $-C_2H_5$ | 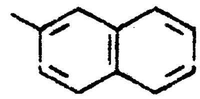 |
| 38 | " | " | $-n-C_3H_7$ | 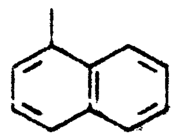 |
| 39 | $-NH-COCH_3$ | $-NH-COCH_3$ | $-C_2H_5$ | $-CH_3$ |
| 40 | $-CH_3$ | $-CH_3$ | $-CH_3$ | 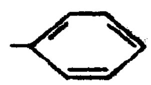 |
| 41 | $-OCH_3$ | $-OCH_3$ | $-C_2H_5$ | $-CH_3$ |
| 42 | $-CH_3$ | -H | 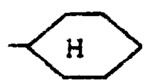 | $-CH_3$ |
| 43 | 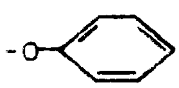 | 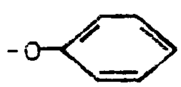 | $-C_2H_5$ | $-CH_3$ |
| 44 | -Cl | -Cl | $-C_2H_5$ | - 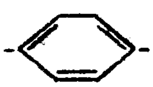 -Cl |
| 45 | " | " | $-CH_3$ | - 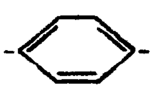 $-NH-COCH_3$ |
| 46 | " | " | $-C_2H_5$ | - 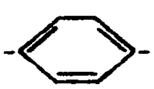 $-OCH_3$ |

Beispiel 47

11 ,0 g Triphendioxazin der Formel

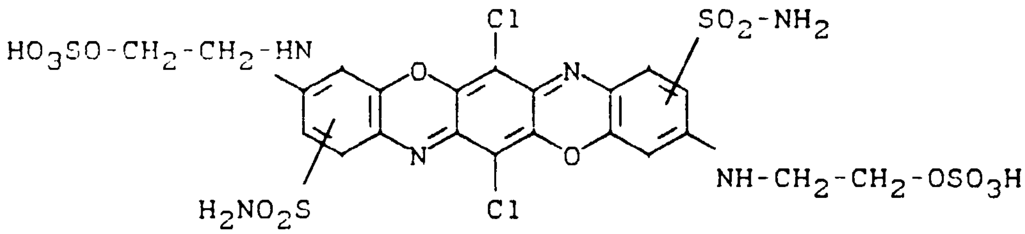

hergestellt durch Kondensation von 5-Amino-2-ß-hydroxyethylamino-benzolsulfamid mit Chloranil und Ringschluß des erhaltenen Dianilids in 20 %igem Oleum unter Zusatz von Kaliumperoxodisulfat, werden in 200 ml Wasser gelöst. Man stellt die Lösung auf pH 9,5 und setzt bei 30-35° 7,1 g p-Toluolsulfochlorid in vier gleichen Portionen im Abstand von jeweils 30 Minuten zu Man hält den pH-Wert ständig auf 9,3-9,5, bis die Kondensation beendet ist. Aus dar anfangs violettblauen Lösung ist nun eine rein blaue Lösung entstanden, aus der man den entstandenen Disulfimid-Farbstoff der Formel

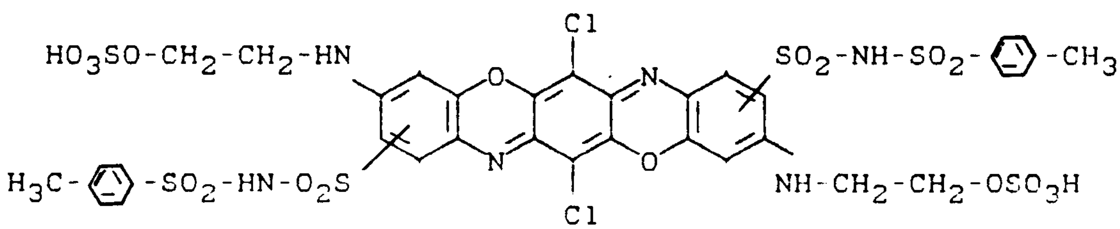

mit Natriumchlorid aussalzt, absaugt und mit 15 %iger Natriumchloridlösung wäscht. Der erhaltene Farbstoff gibt auf Perlon klare, kräftige, blaue Färbungen mit sehr guten Naßachtheiten. C.I: Indicator Numer 14. λmax = 634 nm in Wasser.

**Patentansprüche**

**1.** Farbstoffe der Formel

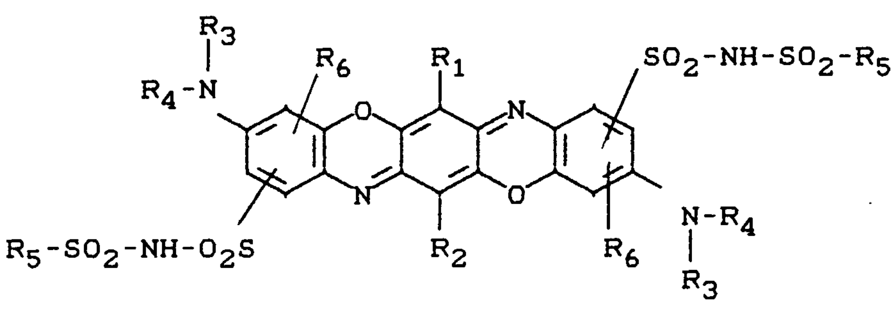

worin bedeuten:

| | |
|---|---|
| $R_1$, $R_2$ = | Wasserstoff, Chlor, Br, $C_1$-$C_4$-Alkyl, $C_1$-$C_4$-Alkoxy, Aryl, Aryloxy, Acylamino, gegebenenfalls substituiertes Carbonamid |
| $R^3$ = | Wasserstoff, $C_1$-$C_4$-Alkyl, welches jeweils gegebenenfalls substituiert ist durch -OH, -O-($C_1$-$C_2$-Alkyl), $-OSO_3H$, $-SO_3H$, $OPO_3H_2$ |
| $R^4$ = | Wasserstoff, $C_1$-$C_8$-Alkyl, welches jeweils gegebenenfalls durch Hydroxy, Methoxy, Ethoxy, Ethoxycarbonyl, Cyano, Sulfato oder Sulfo substituiert ist, Cycloalkyl, Aralkyl oder Aryl, |

wobei

die Alkylreste $R_3$ und $R_4$ zusammen mit dem N-Atom auch die restlichen Glieder eines 6-Rings bilden können,

$R_5$ = Alkyl oder Aryl
$R_6$ = H, Alkyl, Alkoxy, Halogen.

**2.** Farbstoffe des Anspruchs 1 der Formel

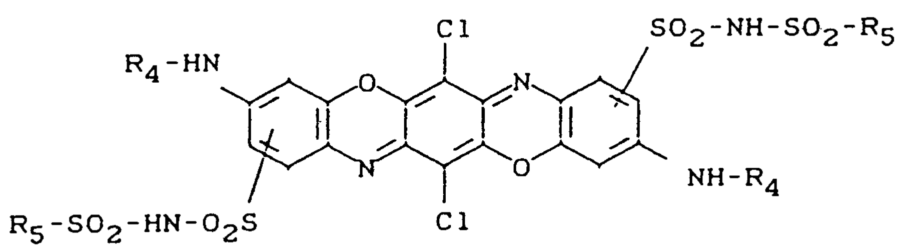

worin
$R_4$ und $R_5$ die in Anspruch 1 angegebene Bedeutung haben.

**3.** Farbstoffe des Anspruchs 1 der Formel

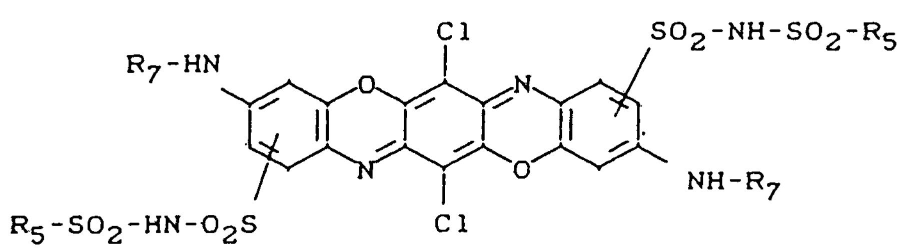

worin bedeuten:

$R_7$ = Wasserstoff, $C_1$-$C_8$-Alkyl, welches jeweils gegebenenfalls durch Hydroxy, Methoxy, Ethoxy, Ethoxycarbonyl, Cyano, Sulfato oder Sulfo substituiert ist oder Cyclohexyl, und
$R^5$ die in Anspruch 1 angegebene Bedeutung hat.

**4.** Farbstoffe gemäss Anspruch 3 der Formel

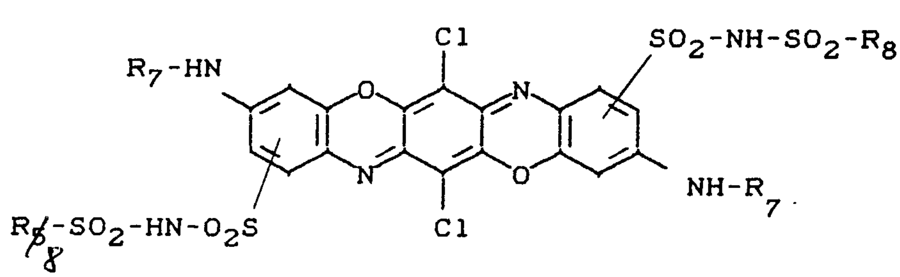

worin

$R_8$ = $CH_3$,

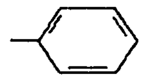

ist und $R_7$ die im Anspruch 3 angegebene Bedeutung hat.

**5.** Verwendung von Farbstoffen der Formel

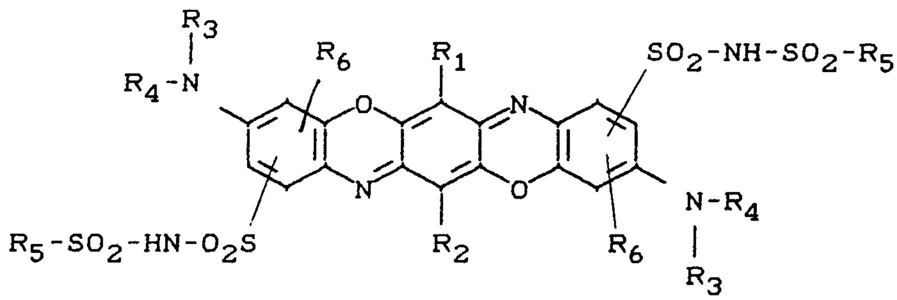

worin bedeuten:

| | | |
|---|---|---|
| $R^1$ $R^2$ | = | Wasserstoff, Chlor, Br, $C_1$-$C_4$-Alkyl, $C_1$-$C_4$-Alkoxy, Aryl, Aryloxy, Acylamino, gegebenenfalls substituiertes Carbonamid |
| $R_3$ | = | H, Alkyl |
| $R_4$ | = | H, Alkyl, Cycloalkyl, Aralkyl oder Aryl, |

wobei

die Alkylreste $R_3$ und $R_4$ zusammen mit dem N-Atom auch die restlichen Glieder eines 6-Rings bilden können,

| | | |
|---|---|---|
| $R_5$ | = | Alkyl oder Aryl |
| $R_6$ | = | H, Alkyl, Alkoxy, Halogen, |

zum Färben von Cellulosematerialien oder von natürlichen oder synthetischen Polyamiden.

## Claims

**1.** Dyestuffs of the formula

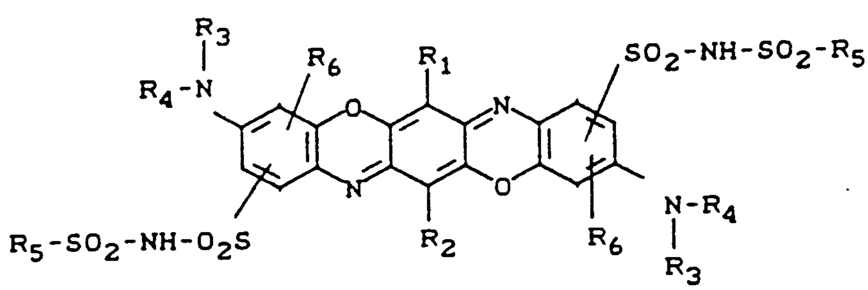

in which:

| | |
|---|---|
| $R_1$ $R_2$ | denote hydrogen, chlorine, Br, $C_1$-$C_4$-alkyl, $C_1$-$C_4$-alkoxy, aryl, aryloxy, acylamino, substituted or unsubstituted carboxamide, |
| $R^3$ | denotes hydrogen, $C_1$-$C_4$-alkyl, each of which is unsubstituted or substituted by -OH, -O- |

$(C_1-C_2\text{-alkyl}),-OSO_3H$, $-SO_3H$, $OPO_3H_2$,

$R^4$ denotes hydrogen, $C_1$-$C_8$-alkyl, each of which is unsubstituted or substituted by hydroxyl, methoxy, ethoxy, ethoxycarbonyl, cyano, sulphato or sulpho, or denotes cycloalkyl, aralkyl or aryl,

in which

the alkyl radicals $R_3$ and $R_4$, together with the N atom, can also form the remaining members of a 6-membered ring,

$R_5$ denotes alkyl or aryl, and

$R_6$ denotes H, alkyl, alkoxy or halogen.

**2.** Dyestuffs of Claim 1 of the formula

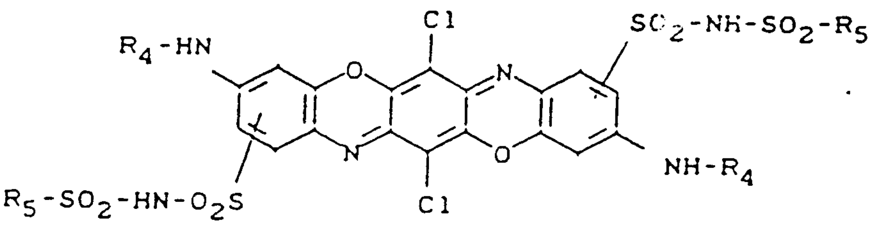

in which

$R_4$ and $R_5$ have the meaning given in Claim 1.

**3.** Dyestuffs of Claim 1 of the formula

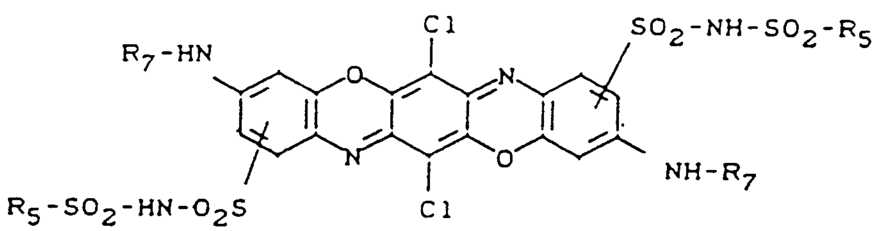

in which:

$R_7$ denotes hydrogen, $C_1$-$C_8$-alkyl, each of which is unsubstituted or substituted by hydroxyl, methoxy, ethoxy, ethoxycarbonyl, cyano, sulphato or sulpho, or denotes cyclohexyl, and

$R_5$ has the meaning given in Claim 1.

**4.** Dyestuffs according to Claim 3 of the formula

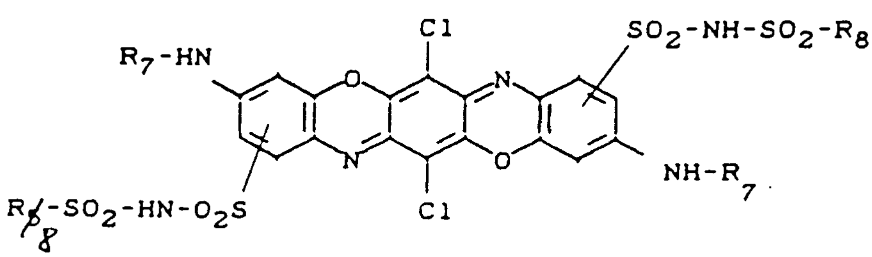

in which

$R_8$ is $CH_3$,

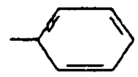

and $R_7$ has the meaning given in Claim 3.

**5.** Use of dyestuffs of the formula

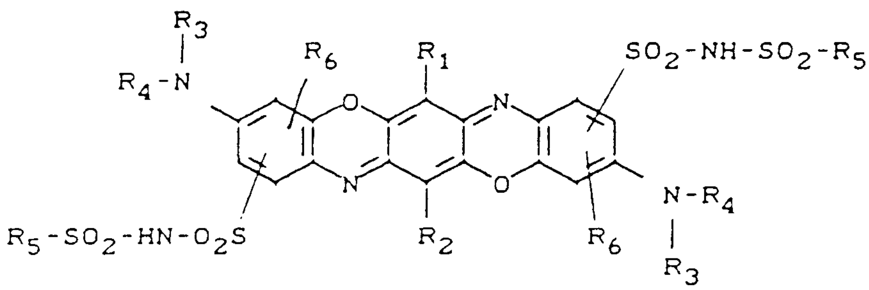

in which:

$R^1$, $R^2$ denote hydrogen, chlorine, Br, $C_1$-$C_4$-alkyl, $C_1$-$C_4$-alkoxy, aryl, aryloxy, acylamino, substituted or unsubstituted carboxamide,

$R_3$ denotes H, alkyl,

$R_4$ denotes H, alkyl, cycloalkyl, aralkyl or aryl,

in which

the alkyl radicals $R_3$ and $R_4$, together with the N atom can also form the remaining members of a 6-membered ring,

$R_5$ denotes alkyl or aryl, and

$R_6$ denotes H, alkyl, alkoxy or halogen

for the dyeing of cellulose materials or of natural or synthetic polyamides.

**Revendications**

**1.** Colorants de formule

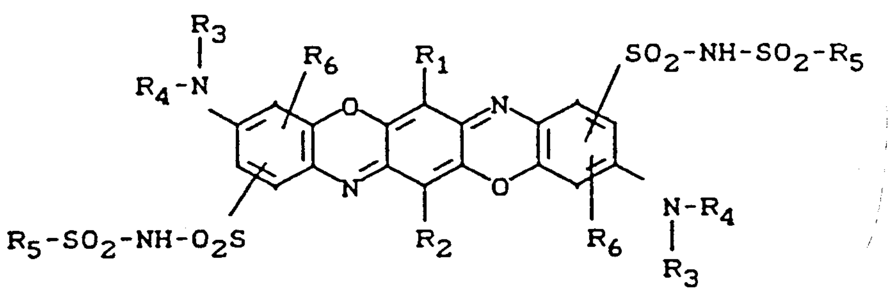

dans laquelle :

$R_1$, $R_2$ = hydrogène, chlore, Br, alkyle en $C_1$ à $C_4$, alkoxy en $C_1$ à $C_4$, aryle, aryloxy, acylamino, carboxamide éventuellement substitué,

$R^3$ = hydrogène, alkyle en $C_1$ à $C_4$, qui est éventuellement substitué dans chaque cas par -OH, -O-(alkyle en $C_1$ ou $C_2$), $-OSO_3H$, $-SO_3H$, $OPO_3H_2$,

$R^4$ = hydrogène, alkyle en $C_1$ à $C_8$ qui est substitué dans chaque cas éventuellement par un radical hydroxy, méthoxy, éthoxy, éthoxycarbonyle, cyano, sulfato ou sulfo, ou

$R^4$ = cycloalkyle, aralkyle ou aryle,

les restes alkyle $R_3$ et $R_4$ pouvant aussi former conjointement avec l'atome d'azote les chaînons restants d'un noyau hexagonal,

$R_5$ = alkyle ou aryle

$R_6$ = H, alkyle, alkoxy, halogène.

**2.** Colorants suivant la revendication 1, de formule

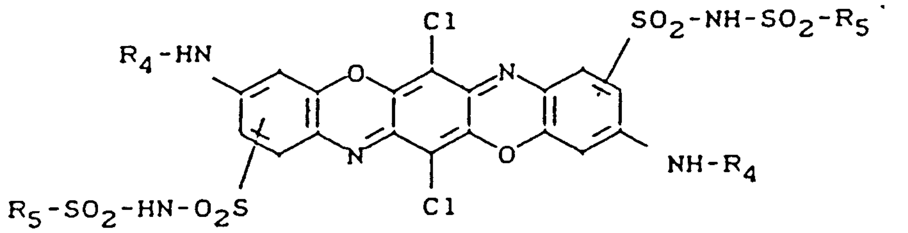

dans laquelle
$R_4$ et $R_5$ ont la définition indiquée dans la revendication 1.

**3.** Colorants suivant la revendication 1, de formule

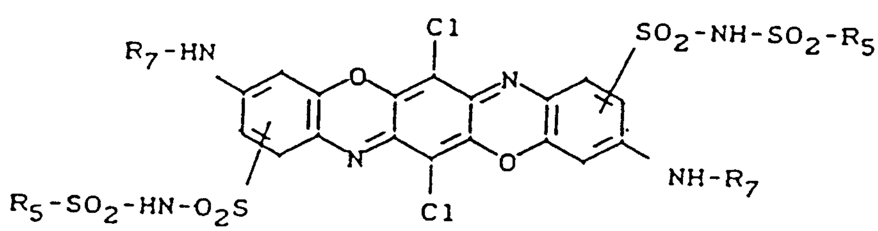

dans laquelle :

$R_7$ = hydrogène, alkyle en $C_1$ à $C_8$, qui est substitué dans chaque cas éventuellement par un radical hydroxy, méthoxy, éthoxy, éthoxycarbonyle, cyano, sulfato ou sulfo, ou

$R_7$ = cyclohexyle, et

$R^5$ a la définition indiquée dans la revendication 1.

**4.** Colorants suivant la revendication 3, de formule

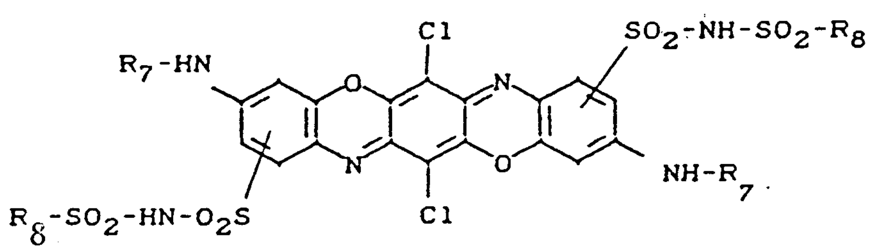

dans laquelle

$R_8$ = $CH_3$,

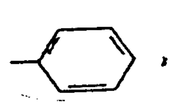

et $R_7$ a la définition indiquée dans la revendication 3.

**5.** Utilisation de colorants de formule

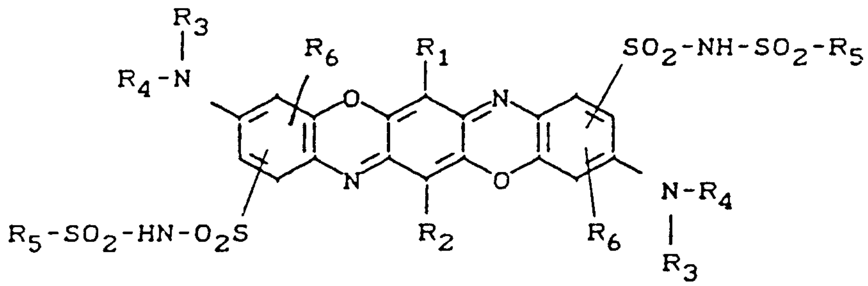

dans laquelle

$R^1$, $R^2$ = hydrogène, chlore, Br, alkyle en $C_1$ à $C_4$, alkoxy en $C_1$ à $C_4$, aryle, aryloxy, acylamino, carboxamide éventuellement substitué,

$R_3$ = H, alkyle,

$R_4$ = H, alkyle, cycloalkyle, aralkyle ou aryle,

les restes alkyle $R_3$ et $R_4$ pouvant former aussi conjointement avec l'atome d'azote les chaînons restants d'un noyau hexagonal,

$R_5$ = alkyle ou aryle,

$R_6$ = H, alkyle, alkoxy, halogène,

pour la teinture de matières cellulosiques ou de polyamides naturels ou synthétiques.